# EUROPEAN PATENT APPLICATION

(11) **EP 2 538 603 A1**
(43) Date of publication of application: **26.12.2012**
(21) Application number: 11170532.3
(22) Date of filing: 20.06.2011
(51) Int. Cl.: H04L 5/00

(54) **Apparatus and method for determining a cluster of base stations**

(71) Applicant: NTT DoCoMo, Inc., Chiyoda-ku Tokyo 100-6150 (JP)
(72) Inventor: Scalia, Luca, 81371 München (DE); Biermann, Thorsten, 85764 Oberschleißheim (DE); Choi, Changsoon, 80335 München (DE)
(74) Representative: Zinkler, Franz

(57) **Abstract**

An apparatus for determining a cluster of base stations for a coordinated multi-point transmission to a user equipment, comprises a receiver (400) for receiving channel state information (401, 402) from channels between the user equipment and a first set of base stations. The apparatus further comprises an iteratively operating scheduler (404) the scheduler (404) is configured for determining (410) a first set of base stations comprising base stations having useable channels to the user equipment, for determining a feasibility (412) of a coordinated multi-point transmission for the first set of base stations regarding a wireline network between the base stations of the first set of base stations, for determining (414), in case of a non-feasibility of a coordinated multi-point transmission using the first set of base stations, a second set of base stations having at least one base station not included in the first set of base stations, the at least one base station having a usable channel to the user equipment, and for determining (412) the feasibility of the second set of base stations regarding a wireline network between the base stations of the second set of base stations. Additionally, the apparatus comprises a coordinated multi-point processor (406) for deploying a coordinated multi-point transmission to the user equipment with the second set of base stations in case of a decision by the iteratively operating scheduler that the second set of base stations is feasible regarding the wireline network between the base stations of the second set of base stations.

## Description

### Specification

The present invention is directed to communication applications and particularly to the cooperative transmission in wireless communication scenarios.

Enabling base station cooperation in cellular access networks has attracted a lot of research attention due to the relevant benefits available in terms of wireless transmission capacity and inter-cell interference reduction.

In a Coordinated Multi-Point Transmission (CoMP)-capable system, the selection of the set of cooperating base stations depends on the wireless channel conditions which the User Equipment (UE) experiences towards these potential cooperation partners. However, different CoMP techniques pose stringent capacity and latency requirements on the network infrastructure that interconnects the base stations. Failing in fulfilling such requirements traduces in the failure of the overall base station cooperation, independently on the quality of the wireless links.

It is thus fundamental that, in the process of selecting the cooperative base station cluster (namely, the overall wireless clustering procedure), the "feasibility" of the desired wireless cluster is tested from a wireline (backhaul) perspective.

Reference is made to a CoMP-capable cellular system in which all the base stations have a Controlling Unit (CU) dedicated to CoMP operation. The procedure for the selection of the cooperating Base Station (BS) set, herein referred to as "Wireless Clustering", and the subsequent CoMP transmission deployment is described hereafter.

At a regular time interval (namely, 10 ms), the UE reports to its serving BS the SINR (Signal-to-Interference Noise Ratio) information related to the neighboring BS it can overhear. Based on such information, the serving BS first selects the set of BSs (base stations) which can potentially serve as cooperation partners for the simultaneous data transmission to the UE; then, it requests the UE to estimate the CSI for each BS belonging to the candidates' set. The CSI report from the UE will be used for the scheduling decisions. The CoMP scheduling can now take place: the serving BS, based on the reported CSIs (channel state informations), decides in which physical radio resources (e.g. time slots, frequencies) the joint transmission has to happen. The selection of which radio resources have to be used for the cooperation is related to the quality of the channel the UE experiences from the BSs. A cooperation request for the selected resources is then sent to these BSs, which reply by confirming or not their availability to take part to the simultaneous in the proposed radio resource. Once agreed on the resources for cooperation, a precoding matrix, necessary for coordinated beamforming, is calculated at the serving BS. The precoding matrix and the user data are then shared with the cooperating BSs for the simultaneous transmission. It is noted that the CSI estimation is valid only for 1 ms. The CoMP scheduling process will thus take place up to ten times with respect to the candidate BS cooperative set, which is updated every 10 ms based on the SINR reported by the UE.

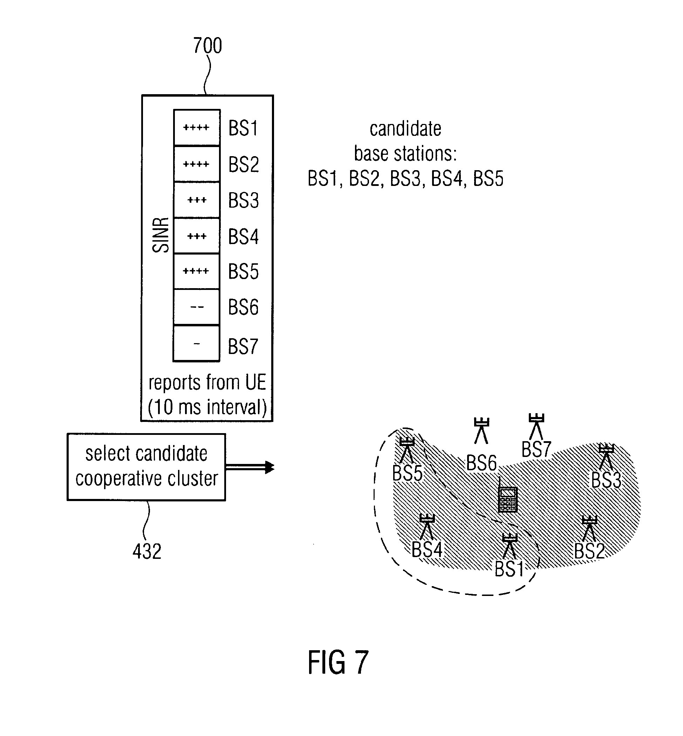

Figure 7 highlights the difference between candidate cooperative BSs set and the set of BSs selected after CoMP scheduling decision. The UE is able to overhear six BSs, excluding BS 1 which is the serving one. However, only BS 2, BS 3, BS 4 and BS 5 have good SINR performance at the UE. The serving BS chooses this set as the candidate cooperative set. The CoMP scheduling decision, taken every 1 ms, is based on the CSI estimate for these BSs. As indicated in the figure, only BS 4 and BS 5 are considered for joint transmission. Based on the subsequent CSI estimation, the schedules cooperative set can change, possibly involving new BSs and excluding some of the currently chosen ones.

The achievable gain by applying wireless cooperation techniques like Coordinated Multi-Point transmission (CoMP) in cellular mobile access networks depends on the condition of the wireless channels between the base stations (BSs) and the user equipments (UEs). Depending on these channel properties, clusters of BS cells are selected to perform the cooperation.

Besides the wireless properties, properties of the wireline backhaul and core network, like link delay, capacity, queuing and load, have to be taken into account when deciding how to set up the cooperating cell clusters, too. This is caused by the required exchange of control and user data traffic within cooperating cell sets as this data is transferred via the backhaul and core network. The data rate of this traffic will exceed that targeted capacity of 1 Gbits/s per cell of future backhaul networks, i.e., congestion scenarios that limit the wireless cooperation are likely to occur.

In the state of the art, the wireline network properties are neglected and an optimal network is assumed when selecting cells for cooperation. This assumption, however, does not hold in reality as the properties of the wireline network influence the performance or even limit the feasibility of the wireless cooperation technique. Hence, wireless channel state information is collected and exchanged for clusters that can never be realized due to the wireless network limitations. This causes unnecessary overhead (backhaul network traffic and computation load) which even more limits the cooperation opportunities.

To overcome the described problem, two approaches exist:
1. Design the wireline network such that it can be assumed to be optimal for a certain (set of) wireless cooperation techniques. This can happen offline, i.e., before the cooperative network is deployed, and to a certain extent also online, i.e., while the network is operating after it has been deployed. In this case, the online reconfiguration of the wireline network is required.
2. Accept that the wireline network is suboptimal at some places. To deal with this, the decision process on how to choose cooperating cell clusters is supported by information about the wireline network part in addition to the wireless channel conditions. This happens online, i.e., while the network is operating.

Note that going for the first approach is not enough and still requires solving the second problem. Over-provisioning the wireline capacity is not only detrimental for the CAPEX/OPEX costs, but also does not solve the issue related to the latency which can occur at some backhaul network routers. Moreover, reconfiguring the backhaul network to support base station cooperation might be difficult due to the time scales required for this operation, which, for certain hardware, is one or more orders of magnitude bigger than the dynamics of the wireless channel (1ms).

The support of base station cooperation from the wireline point of view has been recently considered in the 3Gpp committee 3Gpp RAN1 64, document R1-110866. At this initial stage, the requirements for the backhaul implementation have been listed, in order to understand which ones of the available backhauling technologies are the most promising for CoMP.

It is the object of the present invention to provide an improved concept for determining a cluster of base stations.

This object is achieved by an apparatus for determining a cluster of base stations in accordance with claim 1 or a method of determining a cluster of base stations in accordance with claim 14 or a computer program in accordance with claim 15.

For providing an improved determination of a cluster of base stations, an apparatus comprises a receiver for receiving channel state information from channels between the user equipment and a first set of base stations and an iteratively operating scheduler which is configured for determining a first set of base stations comprising base stations having useable channels to the user equipment, for determining a feasibility of a coordinated multi-point transmission or reception for the first set of base stations regarding a wireline network between the base stations of the first set of base stations, for determining, in case of a non-feasibility of a coordinated multi-point transmission using the first of base stations, a second set of base stations having at least one base station not included in the first set of base stations, the at least one base station having a usable channel to the user equipment, and for determining the feasibility of the second set of base stations regarding a wireline network between the base stations of the second set of base stations. The apparatus furthermore comprises a coordinated multi-point processor for deploying a coordinated multi-point transmission to the user equipment with the second set of base stations in case of a decision by the iteratively operating scheduler that the second set of base stations is feasible regarding the wireline network between the base stations of the second set of base stations.

It is a feature of the present invention that the present invention constitutes a CoMP clustering method that selects the wireless clusters based on their feasibility within a joint transmission (JT) capable CoMP system, where the cooperating points simultaneously transmit to the user equipment UE.

Due to channel state information received by a receiver for receiving such channel state information, a first set of base stations is found and, for this first set of base stations which is determined based on an actual channel situation, the feasibility of this first set of base stations with respect to the wireline network is tested. If this test is successful, i.e. if the first set is feasible, then this first set is used as it is for the cooperative multi-point transmission/reception. However, if it is determined that a base station of this set is not feasible due to the wireline networks such as due to load or delay constraints imposed by the wireline network, then a second set of base stations is selected, where this second set has at least one base station which was not included in the first set. It has been found that adding an additional base station to a set without or together with deleting a base station from the set can fully change the load situation in the wireline network with respect to coordinating multi-point transmission/reception so that the possibility is good that this second set is feasible. However, if this second set is again not feasible, then the iteration proceeds to select a third set and so on until an iteration determination criterion is fulfilled or until a feasible set of base stations has been confirmed by the feasibility checking device which can, for example, be a cluster determiner.

The present invention is advantageous due to the fact that the CoMP scheduling considering backhaul network constraints is performed. The effect of this procedure is that backhaul resource are saved and user performance is improved. Stated in other words, the invention exploits feedback from the backhaul network to reformulate the wireless clustering decisions. Hence, no reconfigurable hardware in the wireline network or any other reconfiguration capability of the wireline network are required, since the present invention, by implementing an iterative approach, uses the flexibility which exists on its own, i.e. the already existing base stations and the location of the user equipment in relation to the base stations.

Subsequently, preferred embodiments of the present invention are discussed with respect to the accompanying drawings, in which:
- Fig. 1: is a block diagram of an apparatus for determining a core network configuration of a wireless communication system;
- Fig. 2a: is a block diagram of an apparatus for determining a core network configuration of a wireless communication system;
- Fig. 2b: is a schematic illustration of a wireless communication system;
- Fig. 3: is a schematic illustration of a wireline clustering and wireless clustering triggered by a detected cooperation necessity;
- Fig. 4a: illustrates a block diagram of a preferred implementation of the apparatus for determining a cluster of base stations in accordance with the present invention;
- Fig. 4b: illustrates a schematic diagram of the inventive method for determining a cluster of base stations with respect to a preferred embodiment;
- Fig. 4c: illustrates a detailed representation for illustrating the situation, how the first set of base stations is found;

- Fig. 4d: illustrates an even more detailed representation for illustrating how the first set of base station is found;
- Fig. 5: illustrates how the second set of base stations is determined;
- Fig. 6a: illustrates an application scenario, in which the present invention is located;
- Fig. 6b: illustrates another representation of a preferred implementation in block form;
- Fig. 7: illustrates the determination of the candidate cooperative cluster comprising the candidate base station;
- Fig. 8: illustrates the CSI collection from the user equipment only for the candidate base station;
- Fig. 9: illustrates the selection of a resource block and a corresponding set of base stations from the channel matrix/list from Fig. 8;
- Fig. 10: illustrates the channel matrix/list after it has been determined that base station 3 is not feasible; and
- Fig. 11: illustrates, with respect to the situation shown in Fig. 7 - 10, different options for selecting the second set and the selection of the final set.

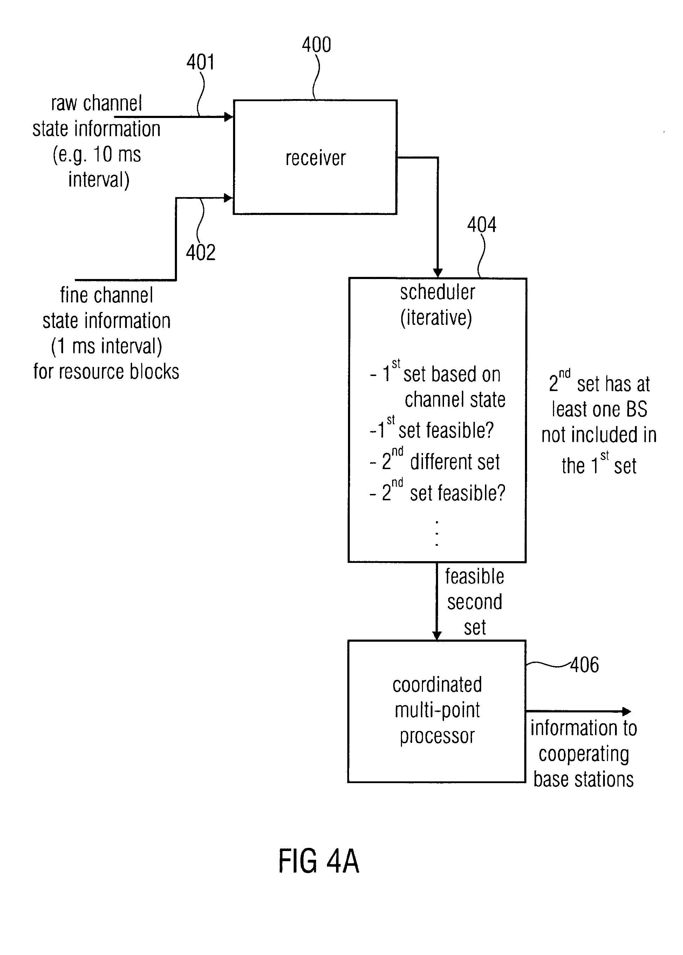

Fig. 4a illustrates an apparatus for determining a cluster of base stations for a coordinated multi-point transmission to a user equipment. The apparatus comprises a receiver for receiving channel state information from channels between the user equipment and the first set of base stations. The channel state information may, in embodiments, comprise a raw channel state information 401 and/or a fine channel state information 402. The raw channel state information may be provided with time intervals of a certain first length such as 10 ms, and the fine channel state information may be provided with a second time interval which is smaller than the first time interval and which is, for example, a 1 ms interval. The raw channel state information may, additionally, be provided not for each resource block, but for the whole transmission resource so that the individual channel state information for an individual resource block which can be a time slot, a frequency slot, a code slot or any other kind of transmission resource is not so accurate in the raw channel state information 401.

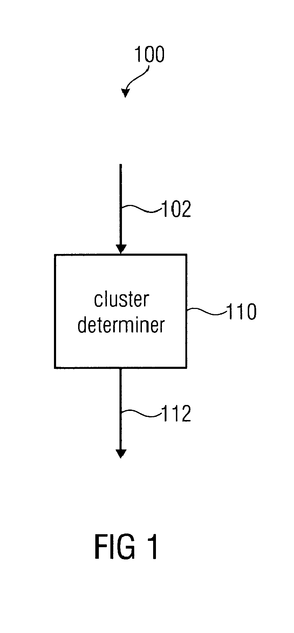

The receiver 400 is connected to a scheduler 404. The scheduler is an iteratively operating scheduler and the scheduler is configured for determining a first set of base stations comprising base stations having useable channels to the user equipment. Additionally, the iteratively operating scheduler is configured for determining whether the first set is feasible, i.e. a feasibility of a coordinated multi-point transmission or reception for the first set of base stations regarding a wireline network between the base stations of the first set of base stations. This functionality can, for example, be implemented as described in the Figs. 1 to 3 or can be implemented in any other way. Additionally, the scheduler 404 is configured for determining, in case of a non-feasibility of a coordinated multi-point transmission or reception using the first set of base stations, a second set of base stations having at least one base station not included in the first set of base stations, where the at least one base station has a useable channel to the user equipment. Additionally, the iteratively operating scheduler 404 is configured for determining the feasibility of the second set of base stations regarding the wireline network between the base stations of the second set of base stations. Furthermore, the apparatus illustrated in Fig. 4a comprises a coordinated multi-point processor 406 for deploying a coordinated multi-point transmission or reception with the user equipment and the second set of base station s in case of a decision by the iteratively operating scheduler 404 that the second set of base stations is feasible regarding the wireline network between the base stations of the second set of base stations. Then, the coordinated multi-point processor 406 will send information to cooperating base stations which is required for the coordinated multi-point transmission or reception, where this information may comprise, for example, communication information for agreeing with the base stations on the resources for cooperation. Additionally, the information to cooperating base station may comprise a precoding matrix necessary for coordinated beamforming and may, in certain circumstances, also comprise the data to be transmitted to the user equipment.

Considering a Joint Transmission (JT) capable CoMP system where the cooperative points simultaneously transmit to the UE, we propose a CoMP clustering method that selects the wireless clusters based on their feasibility. Once the UE reports the Channel State Information (CSI) of the candidate cooperating base stations, the CoMP scheduler at the serving base station not only determines in which radio resource blocks (time slots, frequency or both) the cooperative transmissions should happen, but also invokes a wireline clustering function to check the possibility of deploying the desired cooperative set according to the current backhaul network conditions. The result of such check is used by the CoMP scheduler to eventually changes its decisions and perform new ones within an allowed time interval.

The effect of such method is that CoMP transmission/reception is always deployed according to the feasible wireless cooperating set. This avoids wages of signaling and backhaul resources due to the inclusion of cooperation points which are not able to fulfill the CoMP requirements.

The proposed concept can be used to efficiently deploy cooperative base station clusters. Our mechanism improves the usage of the backhaul network in supporting base station cooperation. The use of CoMP techniques for improving user experience will provide benefit for the provider in terms of offered services and achievable revenues.

In contrast to approaches where one firstly considers the possibility of calculating the feasible base station cooperative cluster in advance so that the CoMP scheduling decision is constrained to this feasible set, where backhaul resources are saved by limiting the corporation and, therefore, also the related signaling and data exchange overhead to the base stations which can fulfill the backhaul network requirements that are saved, it has been found that this approach does not provide any advantage in terms of user performance, since the feasible base station cluster which is determined before the CoMP scheduling procedure can be totally different from the one which the CoMP scheduler would have selected without the feasibility constrained.

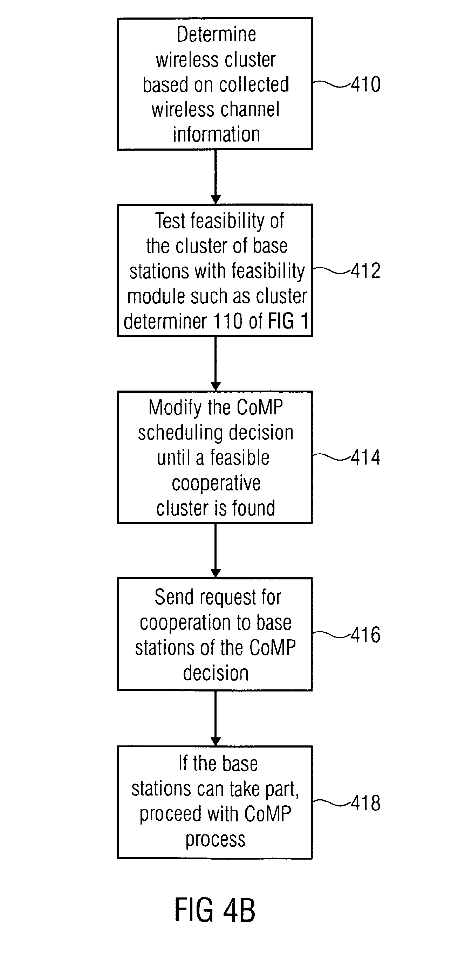

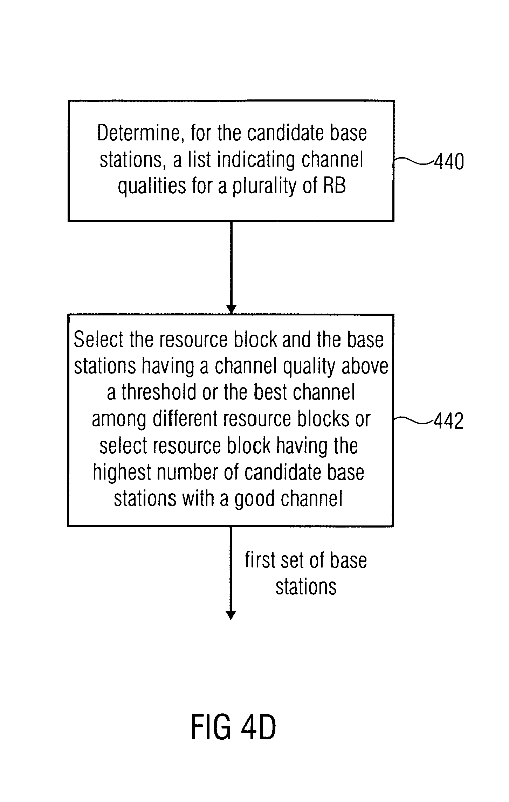

Furthermore, in contrast to a situation where one could reconfigure the wireline networks such to meet the base station cluster selected according to the CoMP scheduler criterion, and where the CoMP scheduler selects the best base station corporative cluster according to the wireless channel point of view, and where a signal to the core network control plane is triggered in order to ensure that the backhaul network is prepared to support it, the present invention is based on an iterative CoMP scheduling procedure. As illustrated at 400 in Fig. 4b, a first step is to determine the wireless cluster based on collected wireless channel information from the user equipment. Then, in step 412, a feasibility test of this cooperative base station cluster is performed by interacting with a wireline feasibility module. Based on the result, the CoMP scheduling decision is modified as illustrated in step 414, until a feasible corporative cluster is found. Then, in step 416 a request for a cooperation is sent to base stations of the CoMP decision set of base stations and, as outlined in step 418, the CoMP process is proceeded if the base stations can take part. Therefore, starting from the serving base station, a fundamental difference exists between the inventive procedure and the above described approach, where the set of base stations which can potentially take part to the cooperation is first pre-calculated and the CoMP scheduling procedure is performed thereafter for a subset of these potentially cooperation partners. However, in the present invention, the CoMP scheduling procedure is executed first. Then, as illustrated in Fig. 4d, the feasibility test is executed (412) for the desired set and not for all the potential partners. Furthermore, the decision about cooperation partners is changed based on the feasibility of the selected cooperative cluster.

In order to ensure the feasibility of the selected cooperative BS set, we propose to include the feasibility information in the CoMP scheduling decisions. Once the candidate cooperative set has been individuated, the serving BS first executes a CoMP scheduling decision based on the reported CSI estimations from the UE. Then, it pre-checks the possibility deploying it from a backhauling perspective based on the current network status (wired links load, capacity, congestion, BS-to-BS delay). If the scheduling solution is not deployable, a new solution is searched. Once a feasible cooperative cluster is found within a certain CoMP scheduling deadline, the request for cooperation in the selected physical radio resource is sent to the potential cooperation partners. Based on the response from these BSs whether they can to take part or not to the joint transmission, the CoMP scheduling decision is refined or kept.

The overall procedure ensures that, whatever the CoMP scheduling decision, this will be deployable from the backhaul point of view. As a consequence, any backhaul resource waste due to unnecessary signaling or data sharing will be avoided. Unlike a different approach where the CoMP scheduling decisions are constrained within an a-priori calculated feasible cooperative BS cluster, which can totally differ from the desirable (a desirable BS cooperative set, in this context, indicates that the BSs forming this cluster allow for the best user performance when joint transmission schemes are deployed) one, here the CoMP scheduling decisions are taken according to the most appropriate cooperating set, which is selected by taking into account the wireless channel properties and its feasibility from the backhauling point of view. This ensures that the user performance will be the best achievable according to the current network conditions.

Wireless cooperation techniques have constraints towards the wireline part of the network, e.g., in terms of capacity or latency. These constraints must not be violated, otherwise gains on the wireless side diminish or cooperation is even impossible. Our method reduces the probability of failure in the CoMP deployment, thus saving backhaul network resources (improved network operations) and guaranteeing the user with the expected service he/she pays for.

The core of this invention resides in the CoMP scheduling decision procedure, which is taken by considering the backhaul status. The backhaul status and in general the feasibility of the proposed BS cooperation set is assessed through the wireline clustering algorithm we have presented in [1,3]. This functional block takes as input the set D of BSs which the CoMP scheduler selects for cooperation, and returns as output the set F of BSs which can actually cooperate based on the backhaul properties (F ∈ D).

The choice of the BSs belonging to set D is taken by the CoMP scheduler based on the CSI measured and reported by the UE. Based on the result provided by the wireline clustering functional block, the CoMP scheduler can either decide to perform the joint transmission through the feasible set F or changing its scheduling decision (which means, change set D) in favor of another one which involves at least one different BS. Notice that the output of the wireline clustering algorithm changes as soon as a different set D is provided as input. The reason for this is that the load distribution on the backhaul network changes due to the different routing decisions which are taken to deliver the packets to the cooperating base stations.

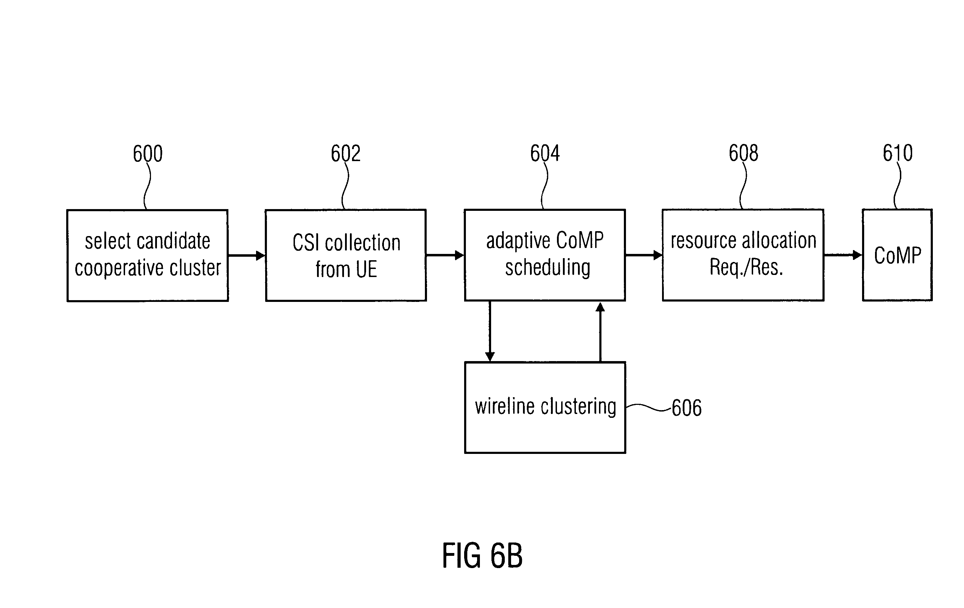

Fig. 6b provides an overview of an embodiment. Particularly, the scheme illustrated in Fig. 6b comprises a block 600 which indicates the process of selecting a candidate cooperative cluster. This selection can be performed by the scheduler 404 of Fig. 4a. Then, a channel state information collection from the user equipment illustrated at 602 takes place, where this channel state information collection from the user equipment illustrated in block 602 is preferably the fine channel state information 404, where the raw channel state information channel obtained by the receiver 400 can be used for selecting the candidate corporative cluster as illustrated in block 600. Then, an adaptive CoMP scheduling 604 takes place which is an interaction with the wireline clustering 606 which means that for a set of base stations determined by block 604, the feasibility is checked by block 606 and block 606 may, for example, be implemented as illustrated in Fig. 1 or Figs. 2 and 3. Then, in step 608 the resource allocation information, i.e., the determine Req/Res, takes place in order to finally actually perform the coordinated multipoint transmission or reception illustrated at 610. The functionalities of blocks 600, 604, 606 can actually be implemented by the scheduler 404 of Fig. 1, the functionality of block 602 can be implemented by block 400 in Fig. 4a, and the functionalities of block 608 and 610 of Fig. 6b can be implemented by the coordinated multi-point processor 406 of Fig. 4a.

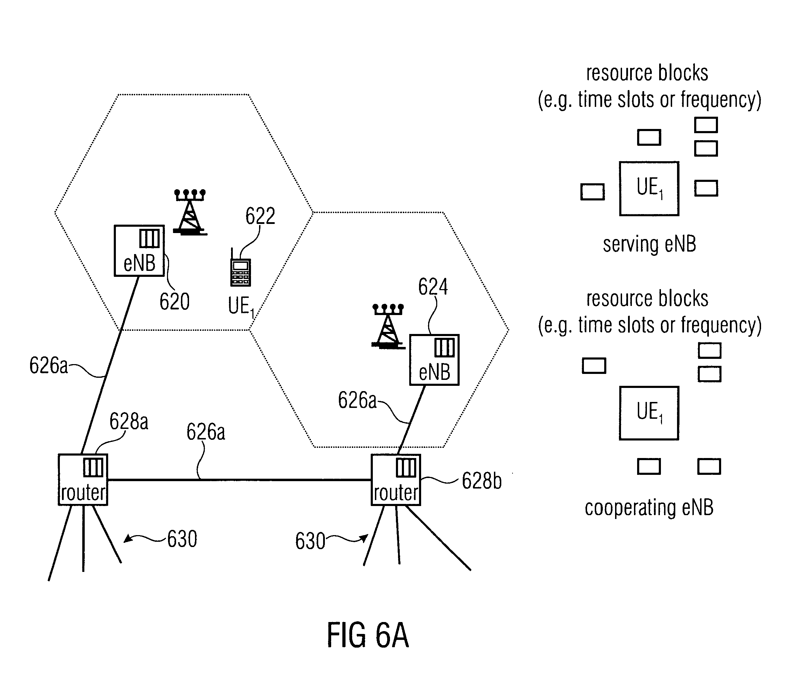

Subsequently, Fig. 6a is discussed in more detail in order to show the scenario. Fig. 6a illustrates a serving base station within associated controller eNB at 620. This base station is the serving base station for user equipment 622 and, for illustration purposes, Fig. 6a only illustrates a single further base station within associated eNB for cooperation with the first base station. This cooperative base station is illustrated at 624. Both base stations 620 and 624 are connected by a wireline network comprising of lines 626a on a direct connection between the base stations 620, 624 and routers 628a, 628b. Additionally, the routers are connected to other components in a wireline backbone network as indicated by lines 630. Hence, Fig. 6a illustrates a joint processing coordinated multipoint (distributed architecture) scenario, where user data is available at multiple eNBs, from where it is jointly transmitted.

Before the present invention is discussed in more detail a preferred implementation of the wireline clustering algorithm 606, illustrated in Fig. 6b, or the functionality of the scheduler 404 in order to check the feasibility is discussed in the context of Figs. 1 to 3.

Fig. 1 shows a block diagram of an apparatus 100 for determining a core network configuration 112 of a wireless communication system according to an embodiment of the invention. A core network of a wireless communication system comprises a plurality of base stations, a plurality of wireline links between the base stations and at least one control unit for controlling a cluster of base stations of the plurality of base stations. The apparatus 100 comprises a cluster determiner 110. This cluster determiner 110 determines as the core network configuration 112 at least one cluster of base stations linked by wireline links and controlled by a same control unit based on a predefined basic network configuration 102, so that latencies between each base station of the cluster and the control unit of the cluster are below a maximal allowable latency. The predefined basic network configuration 102 represents information about all base stations of the core network to be configured and about possible wireline links between the base stations.

By considering the constraints of the wireline core network in terms of the latencies between the control unit and the base stations, the limitation of the wireline core network can be considered more accurate for determining clusters of base stations, which may then be used for a cooperative transmission or reception.

In comparison, known methods neglect the wireline network's properties (constraints) and an optimal network is assumed when selecting cells (base stations) for cooperation. This assumption, however, does not hold in reality as the properties of the wireline network influence the performance or even limit the feasibility of the wireless cooperation technique. Hence, wireless channel state information is collected and exchanged for clusters that can never be realized due to the wireline network's limitations. This causes unnecessary overhead (backhaul network traffic and computation load) which even more limits the cooperation opportunities.

Therefore, by using the inventive concept, the core network traffic can be reduced, so that more capacity is left for feasible cooperative transmission resulting in an increase of the wireless transmission capacity. Further, the energy consumption may be reduced, since the core network traffic and the computation load can be reduced. Additionally, the core network can be reconfigured to react on new load situations, which significantly improves the flexibility of the core network.

A core network, also called backhaul network, represents the wired part of a wireless communication system and comprises among others, base stations, control units (also called central controller or processing node) and wireline links between them. The base stations are distributed over an area to transmit or receive data from wireless devices (e.g. cell phone or laptop). The control units are usually located at base stations, but may also be placed independent from the base stations. Typically, there are fewer control units than base stations, although it may be possible that every base station comprises a control unit. A control unit may control one or more base stations and may be responsible for coordinating cooperative transmission or reception among others.

The latency between a base station and a control unit may be defined in several ways. Generally, it indicates a time between receiving a signal at a base station and receiving the signal or an information associated with the signal at the control unit or between a time a signal is transmitted from the control unit to the base station and receiving the signal at the base station. Alternatively, the latency may be the round trip time from receiving a signal at the base station, transmitting the signal to the control unit, receiving the signal at the control unit, processing the signal at the control unit, transmitting a response to the signal to the base station and receiving the response at the base station. For example, the base station receives channel state information from a wireless device, which is used by the control unit for precoding data. This precoded data is then transmitted as a response to the base station for transmitting the data to the wireless device. In this example, the maximal allowable latency may be the time interval, for which the received channel state information is valid.

The predefined basic network configuration 102 represents an input scenario of a core network to be configured. This may be, for example, a number and/or positions of base stations of the core network and possible wireline links between these base stations, for a new network to be planned. Alternatively, the predefined basic network configuration 102 may contain information about positions of base stations of a core network, the wireline links between the base stations and positions of one or more control units of an existing core network to be reconfigured, for example. In which format this information is provided to the cluster determiner 110 is not important as long as the cluster determiner 110 can process this data. For example, the predefined basic network configuration 102 may be a graph that comprises a vertex for each base station and an edge for each link between the base stations of the core network.

For the reconfiguration of an existing core network, the predefined basic network configuration 102 may represent the existing core network. In this example, the predefined basic network configuration 102 may further represent information about all control units of the core network (e.g. the positions of the control units in the core network) and about possible wireline links between base stations and the control units. If the control units are located at base stations, the possible wireline links between base stations and the control units may be a partial set of the possible wireline links between the base stations.

In some embodiments of the invention more constraints of the wireline core network than only the latencies may be considered. For example, a limitation of the capacity of the wireline links may be considered. In other words, the cluster determiner 110 may determine the at least one cluster, so that a capacity of all wireline links between base stations and between a base station and the control unit is larger than a required capacity. In this connection, the capacity of a link represents a maximal data rate or a maximal remaining data rate (if a current load is considered), which can be realized through the wireline link. As mentioned, a current load or a mean load of a link or the whole core network can also be considered, which may be especially of interest for a reconfiguration of an existing core network. In other words, the cluster determiner 110 may determine the at least one cluster, so that the capacity of all wireline links between base stations and between a base station and a control unit under consideration of a current or a mean load of the core network is larger than a required capacity.

Considering a current or mean load of a core network may result in different core network configurations. In this way, the core network can be adapted to different load situations, so that the data transfer and/or the energy consumption can be optimized. For example, the cluster determiner 110 may determine a first core network configuration 112 under consideration of a first load of the core network at the first time and a second core network configuration 112 under consideration of a second load of the core network at the second time. For some different load situations, the first determined core network configuration 112 may be different from the second determined core network configuration 112.

Further, a cost function of the core network may be considered. This cost function may represent a property of the core network as for example the energy consumption or monetary costs for building up the core network or for operating the core network. In this example, the core network configuration 112 may be determined, so that the cost function of the core network is optimized. Depending on the used optimization algorithm, the optimization of the cost function will result in the actual minimum or maximum of the cost function or result in a minimal solution (which may not be the actual minimum or maximum) found after a predefined number of iterations or a predefined calculation time, for example. In other words, the cluster determiner 110 may determine the at least one cluster, so that a cost function of the core network to be configured is optimized.

Usually, a core network of a wireless communication system comprises more base stations than a number of a base stations controllable by a single control unit. Therefore, the cluster determiner 110 may determine more than one cluster of base stations to obtain the core network configuration 112. In other words, the cluster determiner 110 may determine a plurality of clusters of base stations linked by wireline links and controlled by a respective control unit based on the predefined basic network configuration 102, so that each base station of the core network is contained by one of the determined clusters and all latencies between the base stations and the respective control unit of the cluster are below the maximal allowable latency.

The clusters of the core network configuration can be determined based on a variety of different optimization algorithms. For example, the cluster determiner 110 may determine the at least one cluster based on a mixed integer linear program algorithm (MILP) or a breadth-first-search-algorithm (BFS).

One basic approach may be to position a control unit some base stations away from the border of the core network. The border of a core network may be formed by base stations located at the edge of the core network (e.g. other base stations of the core network are only located at one side of these base stations). The number of base stations between the control unit and the base station at the border of the core network may depend on the maximal allowable latency. In other words, the cluster determiner 110 may determine a position of a control unit of the at least one cluster to be determined based on the predefined basic network configuration 102, so that the number of base stations between the control unit and the base station at the border of the core network is maximal while the latency between the control unit and the base station at the border of the core network is below the maximal allowable latency. Further, other constraints of the core network (e.g. capacity and/or cost function as mentioned above) may also be considered, so that the number of base stations between a control unit and a base station at the border of the core network is maximal while considering also these one or more constraints of the core network.

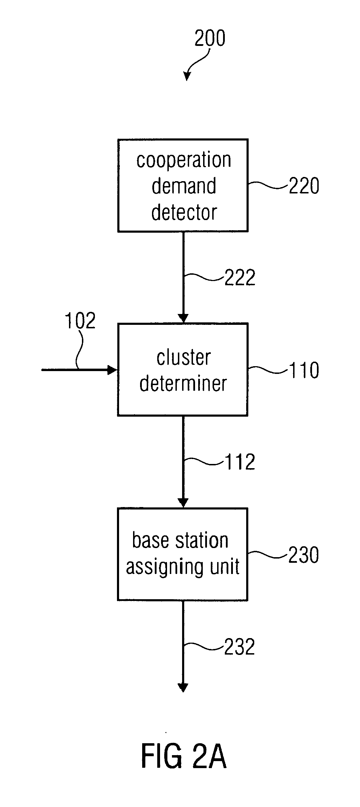

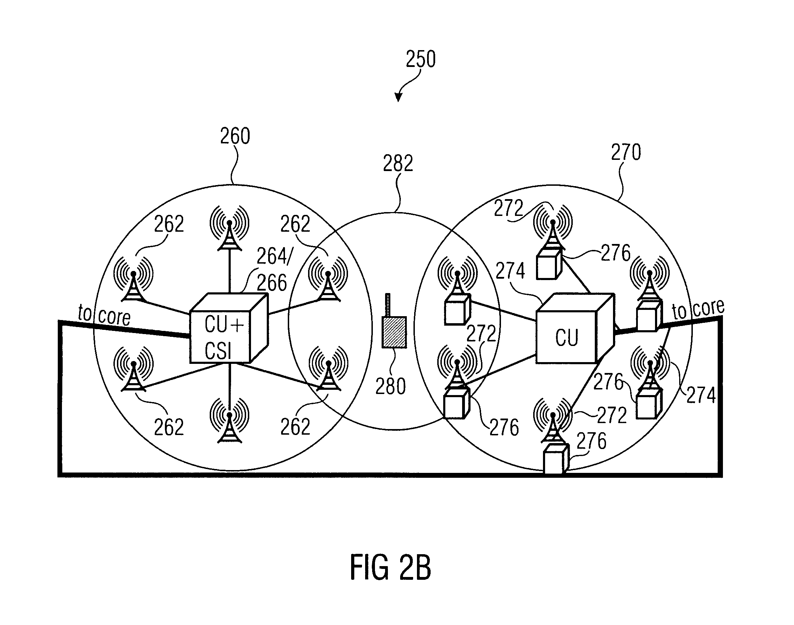

Fig. 2 shows an apparatus 200 for determining a core network configuration 112 of a wireless communication system according to an embodiment of the invention. The apparatus 200 is similar to the apparatus shown in Fig. 1, but comprises additionally an optional cooperation demand detector 220 and/or an optional base station assigning unit 230. The optional cooperation demand detector 220 is connected to the cluster determiner 110 and the cluster determiner 110 is connected to the optional base station assigning unit 230.

The cooperation demand detector 220 may detect a demand 222 of a cooperative transmission or cooperative reception within the wireless communication system. This detected demand 222 of cooperative transmission or cooperative reception may trigger the determination of a (new or optimized) core network configuration by the cluster determiner 110. In this way, a new core network configuration may be determined, which takes into account the detected demand of a cooperative transmission or cooperative reception. For example, a data rate of the wireless connection to a wireless device demanding a high data rate may be detected and the core network may be adapted to this current demand of the wireless device within the range of the wireless communication system.

The base station assigning unit 230 may assign base stations of the core network to a control unit of the core network based on a determined core network configuration to obtain a cluster 232 of assigned base stations. In this way, a current core network configuration may be updated to a new core network configuration by assigning the base stations of a core network to the control units of the core network according to the new determined core network configuration. Thus, varying conditions in terms of demands of cooperative transmissions, cooperative receptions or a current load of the core network can be taken into account. In other words, the base station assigning unit 230 may adapt the core network according to the determined core network configuration.

The cooperation demand detector 220 and the base station assigning unit 230 may be optional parts of the apparatus 200 and may be implemented both together or independent from each other.

Some embodiments according to the invention relate to a wireless communication system with a core network comprising a plurality of base stations, a plurality of wireline links between the base stations and at least one control unit for controlling a cluster of base stations of the plurality of base stations. The wireless communication system comprises an apparatus for determining a core network configuration of a wireless communication system as mentioned above and at least one channel state information determiner. At least one channel state information determiner may determine channel state information between a base station and a wireless device for each base station of a determined cluster located within a transmission range of the wireless device. Further, no channel state information is determined for at least one base station of the core network located within the transmission range of the wireless device not being contained by the determined cluster.

In this way, unnecessary data transfer of channel state information between a wireless device and a base station not contained by the determined cluster can be avoided. So, unnecessary data transfer can be reduced and this saved capacity may be used for other data.

Fig. 2b shows an example of a wireless communications system 250 comprising two clusters of base stations. The first cluster 260 of base stations 262 shows an example for base stations controlled by a central control unit 264 comprising additionally a central channel state information determiner 266. This channel state information determiner 266 may control the determination of channel state information for each base station 262 controlled by the control unit 264. Further, the second cluster 270 of base stations 272 illustrates an example for base stations 272 controlled by a central control unit 274 and a plurality of channel state information determiners 276 located one at each base station 272 of the cluster 270. Each channel state information determiner 272 controls the determination of channel state information of the respective base station 272 in this example. Then, the channel state information may be collected by the control unit 274 and may be used, for example, for a joint precoding of data to be sent to a wireless device 280. Further, Fig. 2b indicates a wireless device 280 with its transmission range 282. The transmission range 282 may be, for example, the area in which the wireless device 280 reaches a sufficient signal strength for base stations. In this example, two base stations 262 of the first cluster 260 and two base stations 272 of the second cluster 270 are within the transmission range 282 of the wireless device 280. Due to the core network configuration, it is not possible to establish a cooperative transmission by all four base stations within transmission range 282 of the wireless device 280. Therefore, it may be sufficient to determine channel state information for the two base stations 262 of the first cluster 260 while no channel state information is determined for the two base stations 272 within the transmission range 282 of the second cluster 270. In this way, unnecessary data transfer within the second cluster 270 can be reduced. In this example, the at least one channel state information determiner 266 may determine only channel state information for each base station of the cluster located within the transmission range 282 of the wireless device 280 without determining channel state information for a base station being not contained by the cluster 260. Alternatively, only the base stations 272 of the second cluster 270 may determine channel state information of the wireless device 280.

For a cooperative transmission or a cooperative reception base stations contained by a same cluster located within the transmission range of a wireless device may be determined to form a subcluster for the cooperative transmission or cooperative reception. In other words, the cluster determiner 110 or a control unit of a cluster may determine base stations contained by a same cluster of the core network and located within the transmission range of the wireless device to obtain a subcluster of base stations. Further, the cluster determiner 110 or the control unit of the cluster may determine base stations of the sub cluster (e.g. only one, some or all base stations of the sub cluster) being able to perform a cooperative transmission to the wireless device or a cooperative reception from the wireless device.

In general, the cluster determiner 110, the cooperation demand detector 220, the base station assigning unit 230 and/or the one or more channel state information determiner 266, 276 may be independent hardware units or part of a computer, digital signal processor or microcontroller as well as a computer program or a software product for running on a computer, digital signal processor or microcontroller.

In the following, examples for the determination of a core network configuration are described in more detail. Although different aspects of the invention are described together in these detailed examples, the different aspects may also be realized independent from each other.

How and where to apply wireless cooperation techniques, like Coordinated Multi-Point Transmission (CoMP) or joint scheduling, does not only depend on the wireless channel conditions but also on the design and current state (e.g., load) of the mobile access network's wireline part. For example, this may be mainly caused by the capacity and latency requirements, which have to be fulfilled on the wireline side to permit cooperation on the wireless side.

The proposed concept may enable to design the wireline part of a mobile access network such that the desired wireless cooperation technique can be applied in the whole network. This design step happens before the network is deployed. Further, the proposed concept may enable to find clusters in a running mobile access network in which the desired wireless cooperation technique can be applied at a given point in time (depending on, e.g., the current load). Finding these clusters may be done in regular intervals (on a time scale of seconds) while the network is operating. Within the found wireline clusters, actual wireless clusters (sub clusters) may be chosen depending on the wireless channel conditions (on a time scale of single wireless frames).

For example, a heuristic algorithm that determines a core network configuration while providing a solution quality that is close to the optimum may be described in the following. Due to the algorithm's high efficiency (less than 1 second runtime compared to 20 hours for the optimal solution) it can be applied in the required time scales. Hence, the important aspect of wireline restrictions for wireless cooperation techniques can be taken into account to improve their performance and to decrease their implementation overhead.

The wireline network may be designed or reconfigured such that it can be assumed to be optimal for a certain (set of) wireless cooperation techniques. This can happen offline, i.e., before the cooperative network is deployed, and to a certain extent also online, i.e., while the network is operating after it has been deployed.

Further, for example, it may be accepted that the wireline network is suboptimal at some places. To deal with this, the decision process on how to choose cooperating cell clusters is supported by information about the wireline network part in addition to the wireless channel conditions. This may happen online, i.e., while the network is operating.

Due to changes that occur during the network's lifetime, like equipment failures or changing traffic load, a reconfiguration may be advantageous. Especially, the changing traffic load in the network is challenging as it changes on time scales even below one second.

Both approaches can be solved by formulating them as a mathematical optimization problem. Solving these optimization problems, however, may be NP-complete and takes up to 20 hours for just small input scenarios that consist of 50 cells (base stations). This long runtime makes it impossible to use this solution approach for real, large networks and to use the approaches online, i.e., while the cooperative network is running.

Alternatively, a heuristic algorithm that approximates the optimal solution at reduced runtime and memory requirements is proposed.

For example, to be able to use wireless cooperation techniques in real networks, the scenarios described above, have to be solved. The design or reconfiguration of the wireline network may usually be solved once at the design time of the network. Include information about the wireline network part in addition to the wireless channel conditions when choosing cooperating cell clusters may be solved in regular intervals during the network's lifetime to react on changes in the network, like varying load.

First, an algorithm that solves the network design problem is proposed, for example. As input, the algorithm takes the locations of all cells (e.g. a cell may be the area controlled by a base station or the base station itself) and the possible interconnections (wireline links) between them. In this context, interconnection between cells means that there is a link between the base stations that control the cells. This input can be, e.g., defined as a graph that contains a node (base station) for each cell and an edge for each possible interconnection between the cells. Nodes and edges may have properties that describe their requirements and capabilities, e.g., the required bandwidth of a cell or the capacity of an interconnecting link. Furthermore, a set of constraints may be provided as input, e.g., required capacity on the wireline side or maximum tolerable (allowable) latency between cooperating cells (base stations). These constraints may be imposed by the desired wireless cooperation technique and need to be fulfilled in each valid solution of the problem, for example.

The proposed algorithm may determine where to optimally position common functions like controllers or processing nodes (control units) within the network. These locations depend on the aforementioned requirements of the wireless cooperation technique. Further, the algorithm may decide how to cluster the cells and how to interconnect the cells within the clusters based on the given possible interconnections (links). All these decisions may be done such that a desired cost metric, like monetary costs, system performance, or energy consumption, is optimized.

For finding feasible clusters in a running (existing) network, the just described algorithm may be slightly modified. Instead of calculating optimal positions for controller/processing nodes in the network, they are fixed and given as additional input parameters. The same is done for the interconnections between the cells. Using this information, the algorithm may just calculate all largest possible *wireline* clusters for a certain cooperation technique based on the given network configuration, its current state (e.g., load), and the technique's constraints, for example. Within these possible clusters, cells can be selected for cooperation according to the wireless channel conditions. Note that such *wireless* clusters cannot span over multiple of the found *wireline* clusters as requirements of the cooperation technique would not be fulfilled.

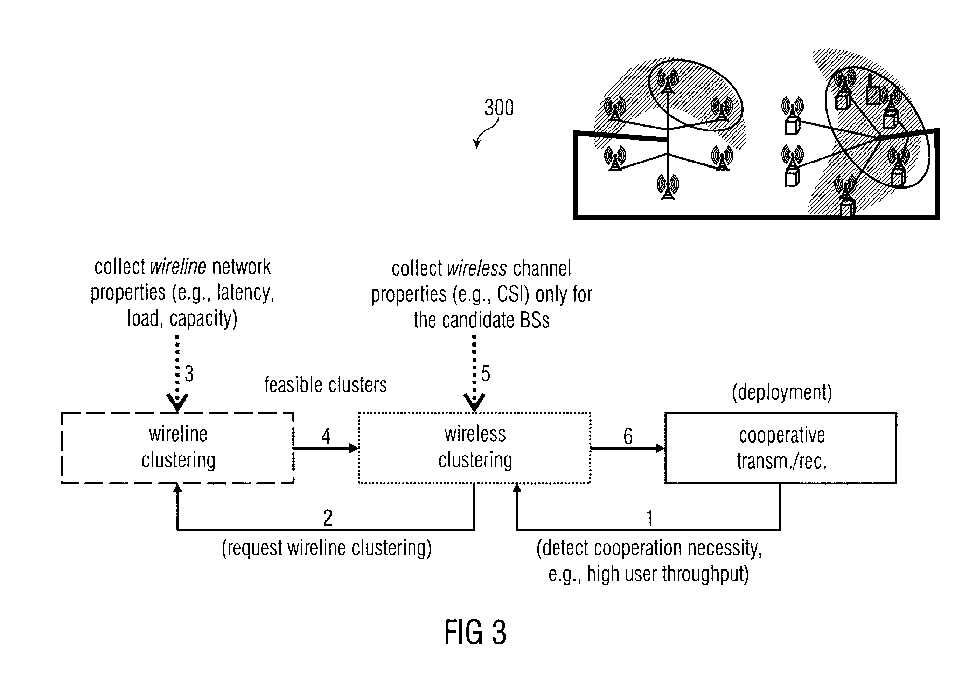

An example of an overview 300 of such a system that incorporates both *wireline* and *wireless* information for clustering is illustrated in Fig. 3. After finding out that cooperation is needed (1), the wireline clustering is triggered (2) based on the current network state (3). The resulting clusters are passed to the wireless clustering mechanism (4) that only considers the feasible clusters and hence only collects wireless channel properties for BSs that are in the feasible clusters (5). In the last step, the calculated clusters are deployed in the network (6).

In this way, infrastructure costs may be reduced. Wireless cooperation techniques have constraints towards the wireline part of the network, e.g., in terms of capacity or latency. These constraints must not be violated, otherwise gains on the wireless side may diminish or cooperation may even be impossible. This means without using the proposed concept, wireless cooperation techniques can only be exploited with a heavily over-provisioned wireline part (core network) of the mobile access network (wireless communication system). This, however, is not desirable from a network operator's point of view as over-provisioning results in expensive, unused resources. Hence, the proposed concept may lead to cost savings for mobile network operators.

Further, the CoMP performance may be increased. For the *wireless* clustering channel state information (CSI) may need to be gathered from all candidate cells. This not only causes non-neglectable overhead on the wireless side but also on the wireline side as the collected information has to be exchanged between the candidate cells via the backhaul network. Both of these overheads are reduced when using the proposed concept for wireline pre-clustering as this lowers the number of candidate cells for which CSI has to be collected.

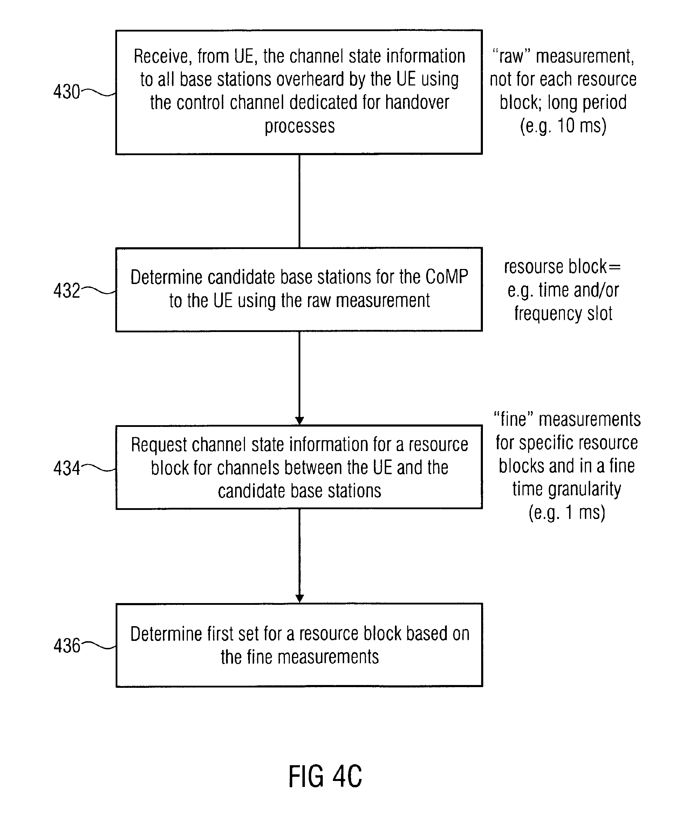

Fig. 4c illustrates steps for performing the determination of the first set of base stations by the scheduler 404.

In step 430, the channel state information to all base stations overheard by the user equipment are received, where a certain control channel dedicated for handover processes may be used for this purpose. This "raw" measurement illustrated in Fig. 4a at 401 does not apply to each resource block specifically. Instead, the following is performed. The user equipment periodically reports to its serving base station the signal to interference and noise ratio (SINR) of the base station it can overhear. From some of these it receives a good signal and from others it receives a bad signal. It is to be noted that this SINR measurement can be performed on the control channel dedicated to it and this control channel is typically used for handover purposes. The scheduler 404 of Fig. 4a, therefore, can use existing infrastructure for further steps such as steps 432, 434, 436. From the information received in step 430, candidate base stations for the coordinated multipoint transmission/reception to the user equipment are determined using the raw measurement as indicated at 432. In this context, it is to be noted that the resource block may, for example, be a time slot, a frequency slot or a time and frequency slot or any other kind of resource block. This procedure is also illustrated in Fig. 7. Fig. 7 illustrates the measurement report received from the user equipment for the overhead base stations. It becomes clear that the user equipment in this example only overhears base stations 1, 2, 3, 4, 5 but does not overhear base stations 6 and 7. Therefore, the candidate base stations are only base stations 1, 2, 3, 4 and 5 and base stations 6 and 7 are not available as candidate base stations for the next 10 milliseconds, i.e., for the long time interval or long period associated with the raw measurement. The actual determination of the candidate base stations can be performed by comparing the received SINR values with a predetermined threshold or by selecting, for example, the best five base stations. However, the comparison to a threshold is preferred. Hence, the block 432 in Fig. 7 corresponds to the step 432 in Fig. 4c.

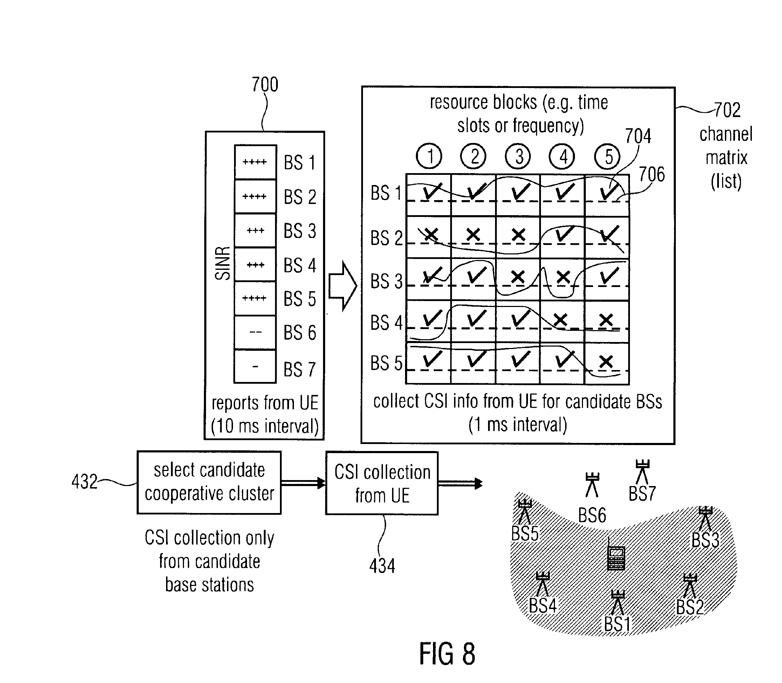

Then, in order to now perform the COMP scheduling, step 434 is performed. In step 434, channel state information for a resource block for channels between the user equipment and the candidate base stations are requested. These channel state information requested in step 434 represent the "fine measurements for specific resource blocks and in a fine time granularity" as illustrated at 402 in Fig. 4a. Block 702 in Fig. 8 illustrates a channel matrix/list. Particularly, the line 704 in each line indicated by "BS1, BS2 ..., BSn" of the matrix in Fig. 8 indicate the actual channel state information and the other line 706 indicates a threshold to which the actual channel information 704 is to be compared. It becomes clear that for all resource blocks, where the line 704, i.e., the actual channel information is below the threshold 706, a "cross" is made in the channel matrix or channel list, and that for all other resource blocks, a check mark is done.

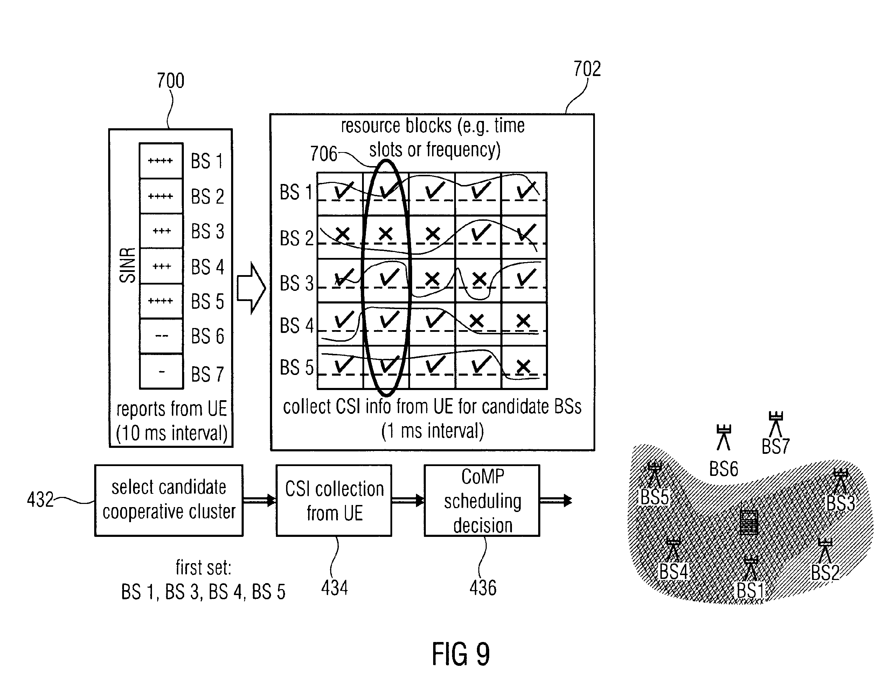

Hence, the actual first set of base stations for a resource block which is determined in step 436 can be any combination of base stations which is indicated in block 702 by check marks. Thus, for resource block 1, the first set could be BS1, BS3, BS5. For resource block 2, the first set can consist of BS1, BS3, BS4, BS5. For resource block 3, the first set would be BS1, BS4, BS5. For resource block 4, the first set would be BS1, BS2, BS5 and for resource block 5, the first set of base stations would be BS1, BS2, BS3. Among all these different possible first sets, step 436 determines one set and, for example, this selection can be done by selecting the set having the highest number of cooperative base stations which would be resource block 2 and the corresponding set consisting of BS1, BS3, BS4, BS5 as illustrated in Fig. 9 where this selection is indicated at 706. The determination of the first set as indicated at 706 in Fig. 9 is the CoMP scheduling decision indicated at block 436 in Fig. 9 or as illustrated in step 436 in Fig. 4c.

Fig. 4d gives more details on how to determine the first set of base stations. Specifically, step 440 indicates an embodiment in which, for the candidate base stations, a list indicating channel qualities for a plurality of resource blocks is determined. This list is illustrated in Figs. 8 and 9 at 702. Specifically, the channel qualities are indicated by crosses or check marks, but any other representation of channel quality such as actually including the measured channel state information can be performed as well. Then, as indicated in step 442 in Fig. 4d, the resource block and the base stations having a channel quality above a threshold or having the best channel among different resource blocks are selected. Alternatively, the selection can be performed in order to select the resource block which has the highest number of candidate base stations with a good channel where this procedure is actually illustrated in Fig. 9 at 706. However, other selection measures can be performed. As outlined in the context of Figs. 8 and 9, for the five resource blocks five different first sets of base stations could be selected, and this selection could also be performed randomly, pseudo-randomly or in a deterministic way, so that for a first time instant the first one is selected for a later time instant the second possibility is selected and so on.

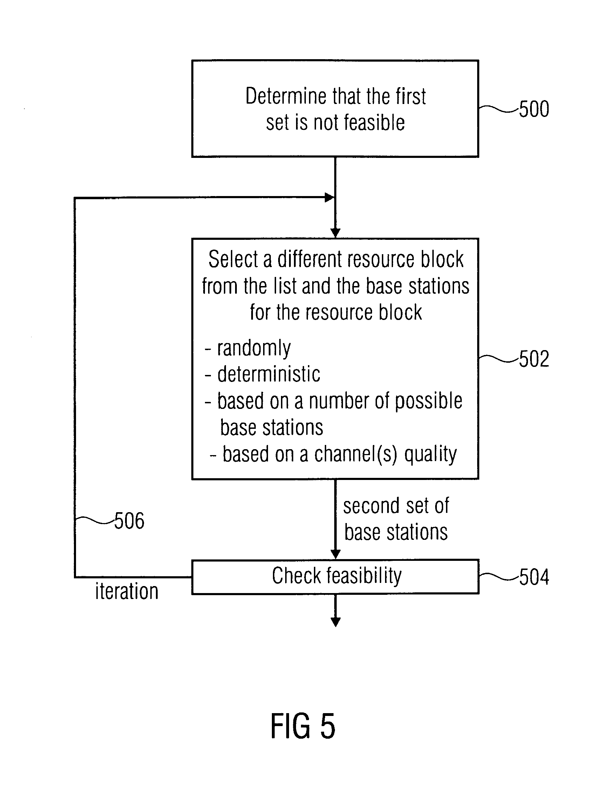

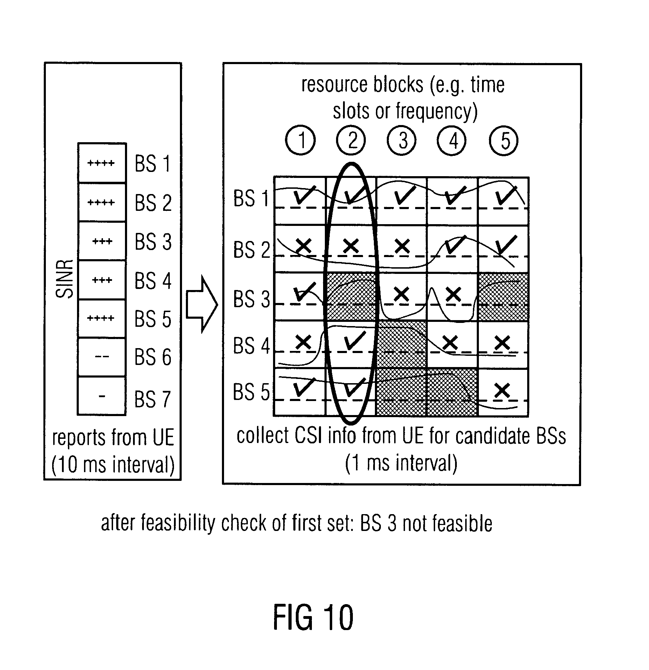

Subsequently, Fig. 5 is discussed. In step 500, a determination is made, as to whether the first set is feasible or not. This is illustrated in Fig. 10, where it has been found out that the first set indicated for resource block 2 is not feasible. This is due to the fact that the base station BS3 can not take part to the CoMP transmission/reception probably due to a long delay or due to congested load situations.

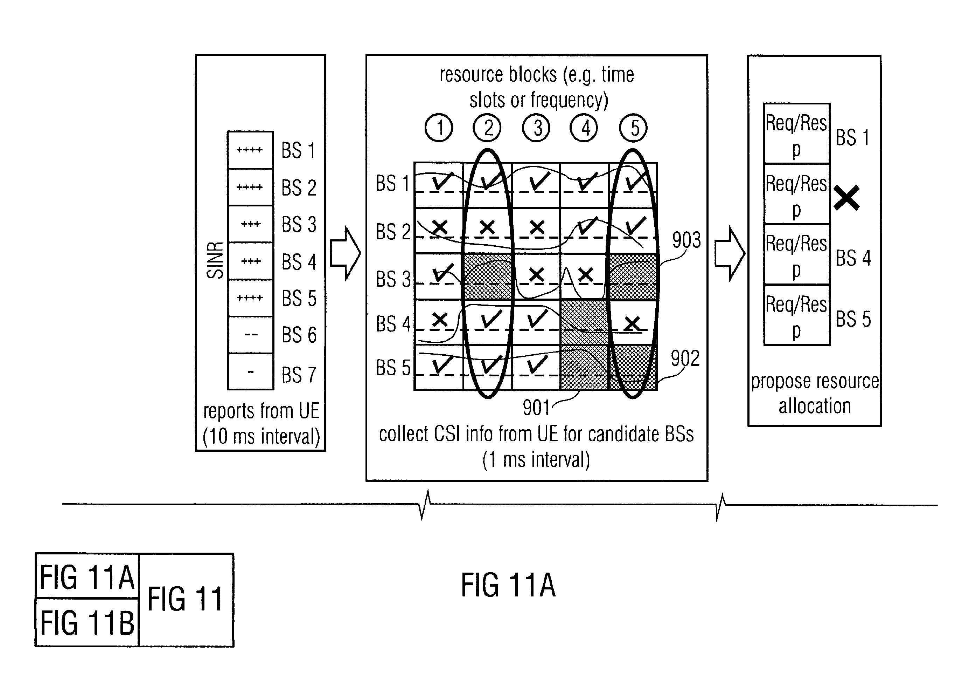

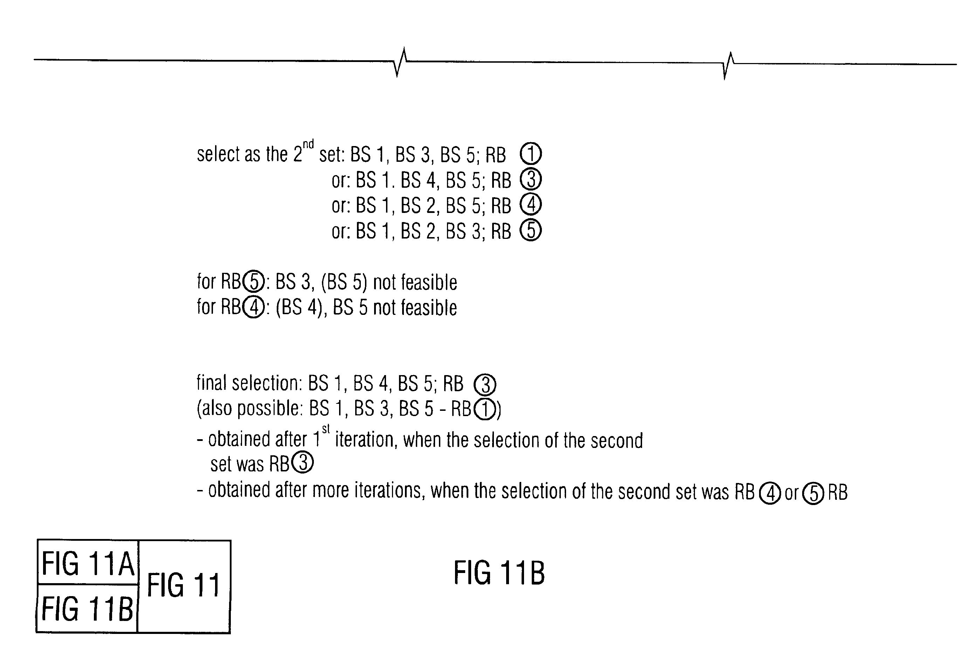

After this determination, step 502 is performed in order to find a second different set as outlined in the context of this scheduler 404 of Fig. 4a. This procedure is illustrated in Fig. 11. Potential second sets of base stations can be the base stations for resource block 1, i.e., BS1, BS3, BS5, or the base stations for resource blocks 3, 4 and 5 as illustrated in Fig. 11. This selection of different resource blocks corresponding to a different set of base stations from the list can be performed, as outlined in block 502 of Fig. 5, randomly, deterministic, based on a number of possible base stations or based on a channel quality from the user equipment to the different base stations. A random selection could be performed on any of the four different possibilities or a deterministic selection would be to always use the second possibility, for example. An additional selection of a different resource block corresponding to a different set of base stations could be based on the number of possible base stations, i.e., whether any of the potential second sets has a higher number of base stations than the other. However, all second sets in the example in Fig. 11 have the same number of base stations. A further way of selecting a different set of base stations would be to select the base stations together having the best channel and this procedure would work if the channel list/matrix does not only include good/bad indications but actual quantitative figures.

Then, after the selection of the second set, the feasibility of this second set is checked as indicated at 504 and it might, for example, turn out that for resource block 5 or resource block 4 certain base stations would not be feasible as indicated at 901, 902 or 903. Due to the non-feasibility of these second sets, a final selection is, in the Fig. 11 example, the selection of base stations 1, 4, 5 although a different result would have been a selection of base stations 1, 3, 5. This final selection is obtained after a single alteration, when the selection of the second set was the set for resource block 3. However, when the selection of the second set, by any of the selection mechanisms indicated in 502, would be any other selection, then more iterations would have to be necessary in order to finally obtain a useful second set, where this iteration feature is indicated at 506 in Fig. 5.

A corporation can also happen in several resource blocks. In this case, the feasibility check is performed by the scheduler 404 for each of these resource blocks. In any case, a different resource block is eventually found with at least one different cooperating base station. It has been found that one single different cooperating base station can totally change the expectable network loads and base stations previously not eligible are now eligible because the load on their links is changed. Typically, the serving base station is the master of the corporative cluster and runs the coordinating process. Therefore, the serving base station is always contained in the cooperating cluster. The serving base station is actually the one which decides who can join the corporation.

Furthermore, the apparatus for determining a cluster of base stations can be included in an actually existing base station or can be located separate from this base station but then would be connected to the serving base station. Hence, the serving base station will always remain the serving base station irrespective of the appearance determined by the set of base stations to be used by the coordinated multi-point processor. Then, the iteratively operating scheduler is configured so that the serving base station is included in the first set of base stations and is also included in the second set of base stations and all other sets of base stations.

Furthermore, a channel state information interpolation can be performed in order to interpolate between the channel state information received every one millisecond as, for example, discussed in the context of Fig. 8. This interpolation can then result in a kind of "smooth line 704" for the channel state information over frequency when the resource blocks are frequency slots or over time when the resource blocks are time slots. In this context, the receiver is configured to interpolate the channel state information for the first set of base stations between the time instance wherein, at an interpolated time point between two adjacent time instance, the interpolated channel state information for the first set of base stations indicates a useful channel for a different set of base stations. Then, the iteratively operating scheduler is configured for using the different set of base stations as the second set of base stations. The channel is, therefore, estimated from the reports collected from the user terminal. If one gets a report on, for example, resource block 1 for base station 1, one can still assume that this information is valid in the next one or two milliseconds.

Furthermore, it is preferred that the iteratively operating scheduler is configured for locally determining the feasibility of the first set of base stations and the second of base stations, i.e., for determining the feasibility without sending out any feasibility requests to other base stations. Instead, the feasibility is determined from the information available at the base station or the apparatus for determining a cluster of base stations associated with the serving base station.

Due to the fact that an iteration is used, the iteratively operating scheduler is configured for only performing a limited number of iterations and when the limited number of iterations is reached, to control an associated base station being the serving base station and not to perform a coordinated multi-point transmission to the user equipment when no feasible and useful set of base stations have been found.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The inventive transmitted signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Apparatus for determining a cluster of base stations for a coordinated multi-point transmission to a user equipment, comprising:
a receiver (400) for receiving channel state information (401, 402) from channels between the user equipment and a first set of base stations;
an iteratively operating scheduler (404) configured
for determining (410) a first set of base stations comprising base stations having useable channels to the user equipment,
for determining a feasibility (412) of a coordinated multi-point transmission for the first set of base stations regarding a wireline network between the base stations of the first set of base stations,
for determining (414), in case of a non-feasibility of a coordinated multi-point transmission using the first set of base stations, a second set of base stations having at least one base station not included in the first set of base stations, the at least one base station having a usable channel to the user equipment, and
for determining (412) the feasibility of the second set of base stations regarding a wireline network between the base stations of the second set of base stations; and
a coordinated multi-point processor (406) for deploying a coordinated multi-point transmission to the user equipment with the second set of base stations in case of a decision by the iteratively operating scheduler that the second set of base stations is feasible regarding the wireline network between the base stations of the second set of base stations.

2. Apparatus in accordance with one of the preceding claims, in which the iteratively operating scheduler (404) is configured to determine the first set of base stations as all base stations which have, for a certain resource block, the useful channel to the user equipment, and
in which the iteratively operating scheduler (404) is configured to determine the second set of base stations so that the second set of base stations does not comprise a base station having a non-feasible wireline connection for a coordinated multi-point transmission, and so that the second set of base stations comprises a further base station having a useful channel for a certain resource block.

3. Apparatus in accordance with claim 2, wherein the resource block for which the first set of base station is determined is different from the resource block for which the second set of base stations is determined.

4. Apparatus in accordance with one of the preceding claims, in which the receiver (410) is configured to receive the channel state information from the user equipment at time instants separated by a certain time interval,
in which the receiver (400) is configured to interpolate the channel state information for the first set of base stations between the time instants wherein, at an interpolated time point between two adjacent time instants, the interpolated channel state information for the first set of base stations indicates a useful channel for a different set of base stations, and
wherein the iteratively operating scheduler (404) is configured for using the different set of base stations as the second set of base stations.

5. Apparatus in accordance with one of the preceding claims, in which the iteratively operating scheduler (404) is configured for only performing a limited number of iterations and, when the limited number of iterations is reached, to control an associated base station being the serving base station to not perform a coordinated multi-point transmission to the user equipment

6. Apparatus in accordance with one of the preceding claims, in which the iteratively operating scheduler (404) is configured to determine, whether the backhaul network supports a coordinated multi-point transmission, and whether the backhaul network provides sufficient network properties for a communication between the serving base station and the selected cooperating base station in accordance with the selected coordinated multi-point transmission.

7. Apparatus in accordance with claim 6, in which the iteratively operating scheduler (404) is configured for determining, whether the backhaul network comprises a sufficient network capacity and a sufficiently low network latency.

8. Apparatus in accordance with one of the preceding claims, wherein the apparatus is included in a base station, wherein the base station is the serving base station of the user equipment, and wherein the base station remains the serving base station irrespective of the appearance determined of the set of base stations to be used by the coordinated multi-point processor, and
wherein the iteratively operating scheduler (404) is configured so that the serving base station is included in the first set of base stations, the second set of base stations and in all other sets of base stations provided that any other set of base stations is determined by the iteratively operating scheduler.

9. Apparatus in accordance with one of the preceding claims, in which the receiver (400) is configured to receive, from the user equipment, a channel state information for each base station, to which a communication channel to the user equipment is possible.

10. Apparatus in accordance with one of the preceding claims, in which the receiver (400) is configured to receive an SINR (signal and interference to noise ratio) value, which is above a predefined threshold.

11. Apparatus in accordance with one of the preceding claims, in which the iteratively operating scheduler (404) is configured for locally determining the feasibility of the first set of base stations and the second set of base stations.

12. Apparatus in accordance with one of the preceding claims, in which the iteratively operating scheduler (404) is configured for determining a set of base stations for a coordinated multi-point technique comprising joint processing, coordinated scheduling or coordinated beam forming.

13. Apparatus in accordance with one of the preceding claims, in which the coordinated multi-point transmission processor (406) is configured to allocate a resource block, for which the second set of base stations has been determined, to the second set of base stations and to transmit coordinated multi-point transmission data comprising useful data and precoding data to the base stations of the second set of base stations.

14. Method of determining a cluster of base stations for a coordinated multi-point transmission to a user equipment, comprising:
receiving (400) channel state information from channels between the user equipment and a first set of base stations;
determining (410) a first set of base stations comprising base stations having useable channels to the user equipment,
determining (412) a feasibility of a coordinated multi-point transmission for the first set of base stations regarding a wireline network between the base stations of the first set of base stations,
determining (414), in case of a non-feasibility of a coordinated multi-point transmission using the first set of base stations, a second set of base stations having at least one base station not included in the first set of base stations, the at least one base station having a usable channel to the user equipment, and
determining (412) the feasibility of the second set of base stations regarding a wireline network between the base stations of the second set of base stations; and
deploying (416, 418) a coordinated multi-point transmission to the user equipment with the second set of base stations in case of the second set of base stations being feasible regarding the wireline network between the base stations of the second set of base stations.

15. Computer program having a program code for performing, when running on a computer, the method of claim 14.
